# EUROPEAN PATENT SPECIFICATION

(11) **EP 1 520 484 B1**
(45) Date of publication and mention of the grant of the patent: **26.08.2009**
(21) Application number: 04077755.9
(22) Date of filing: 04.10.2004
(51) Int. Cl.: A23L 1/00, A23P 1/16

(54) **Method for obtaining a monodisperse foam, and product obtainable by such method**
Verfahren zur Herstellung von einem monodispersen Schaum , und dadurch hergestelltes Produkt
Procédé pour la fabrication d'une mousse monodisperse , et produit obtenu par ce procédé

(30) Priority: 02.10.2003 NL 1024433; 02.10.2003 NL 1024438; 02.10.2003 NL 1024434; 02.10.2003 NL 1024435
(43) Date of publication of application: 06.04.2005
(73) Proprietor: Friesland Brands B.V., 7943 PE Meppel (NL)
(72) Inventor: Poortinga, Albert Thijs, 7422 LN Deventer (NL); Koman-Boterblom, Hendrika, 7421 EZ Deventer (NL); Wijnen, Maria Elisabeth, 7425 GS Deventer (NL)
(74) Representative: Winckels, Johannes Hubertus F.

(56) References cited:
- EP-A- 0 390 217
- EP-A- 0 521 543
- EP-A- 0 657 224
- WO-A-99/31019
- DE-A- 4 231 940
- DE-U- 29 815 634
- GB-A- 978 979
- US-A1- 2003 089 244
- PATENT ABSTRACTS OF JAPAN vol. 1997, no. 04, 30 April 1997 (1997-04-30) -& JP 08 318138 A (MITSUBISHI HEAVY IND LTD), 3 December 1996 (1996-12-03)
- DATABASE WPI Section Ch, Week 199108 Derwent Publications Ltd., London, GB; Class D13, AN 1991-056365 XP002284229 -& SU 1 551 947 A (SALES EQUIP RES EXP) 23 March 1990 (1990-03-23)
- PATENT ABSTRACTS OF JAPAN vol. 1999, no. 08, 30 June 1999 (1999-06-30) -& JP 11 057308 A (JGC CORP; NATL SPACE DEV AGENCY JAPAN<NASDA>; UCHU KANKYO RIYOU), 2 March 1999 (1999-03-02)
- DATABASE WPI Section Ch, Week 198242 Derwent Publications Ltd., London, GB; Class J04, AN 1982-90003E XP002284230 -& SU 890 246 A (BARNAUL BR AUTOMATI) 15 December 1981 (1981-12-15)
- PATENT ABSTRACTS OF JAPAN vol. 2000, no. 26, 1 July 2002 (2002-07-01) -& JP 2001 259305 A (HOUSE FOODS CORP), 25 September 2001 (2001-09-25)
- PATENT ABSTRACTS OF JAPAN vol. 016, no. 509 (C-0997), 21 October 1992 (1992-10-21) -& JP 04 187256 A (JAPAN TOBACCO INC), 3 July 1992 (1992-07-03)

## Description

The invention relates to a method for obtaining a monodisperse foam. A monodisperse foam is understood to mean a foam in which the bubbles present therein have substantially the same dimensions.

There is a wide need for healthy food products having a unique taste and a unique mouthfeel. Over the last years, the products having a low fat content have become popular because of health aspects. However, such products often lack the taste and the mouthfeel of whole products.

It is known that the taste sensation and the mouthfeel of foods can be considerably influenced by the presence of bubbles. Adding gas bubbles to a product moreover provides the possibility of low-fat products having improved sensory properties. The sensory properties can be controlled *inter alia* in the area of creaminess, freshness, softness or airiness. Which sensory property is influenced, and in what way and to what extent, depends *inter alia* on the size and the number of bubbles. Thus, the attribute of creaminess in a mousse is more enhanced when smaller bubbles are present in not too high numbers. The attribute of airiness in mousse is more enhanced when larger bubbles are present in higher numbers. In this light, see for instance Kilcast & Clegg in Food Quality and Preference 13 (2002), 609-623.

The appearance of a foamed product is also partly determined by the amount of bubbles and the bubble size in the foam.

Foamed products have already been known in the market for decades. Examples are mousses, whipped cream, ice-cream, shakes and desserts. Such products generally have a more or less fixed structure which enables the bubbles to be retained in the product for the required, at least desired, storage time of a few weeks up to months. Pourable foamed products are less well known. Generally, such products, for instance soft drinks, have a foam stability of the order of a few seconds instead of a few weeks. To prepare foamed, pourable products in which the bubbles remain present for a few weeks up to months, small bubbles are required.

It is often preferred that a foamed product be stable, at least during the time that it can be used, and consumed in the case of foods.

The term "stability" in this connection points to the possibility of storing the foamed product for a longer time without ongoing changes in the size of the gas bubbles present leading to undesired coarsening and/or possibly to creaming of the gas bubbles and/or other unwanted structural changes.

Foamed products are by definition thermodynamically unstable. The three most important destabilization processes that occur are creaming, coalescence and disproportionation of the foam-forming gas bubbles.

Creaming of bubbles can be controlled in practice by setting a proper ratio between bubble size and product viscosity.

Coalescence of two bubbles to form one larger bubble occurs especially when the product film between two bubbles is very thin. In products in which relatively little gas is distributed, such as pourable foamed products, coalescence is mostly not a great problem.

Disproportionation, also known as Ostwald ripening, involves larger bubbles growing out at the expense of smaller bubbles. It is a result of gas diffusion between bubbles of different size, and between bubbles and the environment. As a result of the coarsening of the gas bubbles present, the appearance changes significantly and moreover the driving force towards creaming becomes greater. As a result, the stability of the foam can deteriorate dramatically.

Stabilization of pourable foamed products against disproportionation will, in practice, hardly if at all be realized by the rheological properties of the continuous phase, as is the case, for instance, with mousse, where stabilization is partly determined by the gelatin network present. In the case of pourable foamed products, the long-term stabilization against disproportionation can be realized by the surface properties of the bubble surfaces. The simultaneously filed Dutch patent application 1024435 entitled: "Method for stabilizing an edible foam; the stable foam; and compositions comprising such foam" provides a solution to that end. The content of that patent application is understood to be incorporated herein by reference.

Another possibility of increasing the stability of a foamed product can be realized by arranging for the variation in bubble size to be as small as possible.

The present invention contemplates a method by means of which a foam is obtained whose bubbles are substantially equally large. Additionally contemplated is achieving this object with a least possible energy consumption.

According to the invention, a method for manufacturing a substantially monodisperse foam is provided, wherein from an unfoamed starting product, in a first foam forming step, a (relatively coarse) prefoam is formed which is insufficiently monodisperse, wherein the prefoam is passed through a membrane having a particular pore diameter for forming a foam which is monodisperse wherein the membrane has a thickness of at least 30 times the pore radius. Incidentally, eligible for use as membrane is in fact any permeable material in which the perforations are such that a monodisperse foam remains. To that end, the pore size must be less than the desired bubble size. Preferably a membrane having a thickness of at least 50 times the pore radius and most preferably of at least 100 times the pore radius, is used.

EP-A-0 390 217 describes a process for preparing a foamed seasoning, comprising adding an emulsifier to an aqueous seasoning and then forcing gas to admix therewith to make foam. The foam is passed through a net.

JP-8318138 deals with the use of a porous hollow-fibre membrane to remove oxygen from treated water. By removing oxygen no foam can remain.

DE-U-29815634 teaches a method and apparatus for foaming milk for cappuccino comprising the use of a foaming screen.

The fine thing about the method according to the invention is that the bubble size of the foam obtained with the method can be controlled on the basis of the proper choice of the pore size of the membrane. Accordingly, when the starting product is a food, the desired sensory properties can be obtained with the method according to the invention. Moreover, the method according to the invention takes particularly little energy. When a prefoam with bubble sizes of between 30 and 250 micrometers is passed through a membrane of an average pore size of 8 micrometers, the energy required for that is about 2.5 kJ per liter of foam. To obtain such a decrease in bubble size utilizing the Mondomix rotor-stator mixer, known per se, an amount of energy of 500 kJ per liter of foam is needed. The foregoing figures show clearly that a considerable saving of energy is obtained in the method according to the invention, in addition to the other advantages, described above.

According to a further elaboration of the invention, the average pore diameter of the membrane is chosen to be substantially ten times smaller than the desired bubble diameter of the substantially monodisperse foam. Thus, through a choice of the proper pore size, the bubble size of the foam can be defined. The invention further provides a method for imparting particular sensory characteristics to an edible foamed product utilizing the above-described method, wherein the sensory properties are set through a suitable choice of the bubble size of the foam, wherein this bubble size is determined by choosing the pore size of the membrane to be about ten times smaller than the desired bubble size.

According to a further elaboration of the invention, the prefoam can be produced by a standard commercially available foaming device. To be considered here, for instance, is the well-known Mondomix rotor-stator mixer. It is also possible, however, that the prefoam is produced utilizing any other method that forms a non-monodisperse foam.

According to a further elaboration of the method, it is preferred that the denaturation and the compression of the bubbles take place after the foam has passed the membrane. This can be realized, for instance, in that the foam, after it has passed the membrane, is heated at a temperature and for a time which have been selected to be such that denaturation occurs.

Incidentally, these embodiments are described in detail in the Dutch patent applications NL 1024435, NL 1024434 and NL 1024438, filed simultaneously with the present application.

The contents of these patent applications and in particular the subject matter of each of the claims 1 of these applications are understood to be incorporated herein by reference. What is effected in particular by the use of the methods from the simultaneously filed patent applications is that after or during the foaming of the product, proteins from the unfoamed starting product, upon adsorption to the bubble surfaces, denature, after which the thus formed protein layer compresses upon allowing the bubble to shrink, so that an undeformable, at least rigid, surface is formed around the gas bubbles.

According to a further elaboration of the invention, the pore size of the membrane is in the range of 0.1-20 micrometers, more in particular in the range of 0.2-10 micrometers. With such a membrane, a monodisperse foam is obtained whose average bubble size varies between 1 and 100 micrometers, more preferably between 3 and 30 µm, starting from a prefoam in which the average bubble dimensions vary from 30 to 250 micrometers.

According to a further elaboration of the invention, the viscosity of the prefoam can be increased by adding a thickener to it, such as, for instance, xanthan gum. Such a thickener prevents the bubbles from creaming and thus leaving the product. According to a further elaboration of the method, the prefoam contains at least substantially 20% of gas. However, also lower or higher overrun percentages can be used. The starting product generally comprises a solution of surface-active substances which stabilize the bubbles and in particular prevent disproportionation. Examples are sugar esters, TWEEN®, and stabilizing proteins.

According to a further elaboration of the invention, the membrane that is used can be, for instance, a sintered metal membrane. The use of a ceramic membrane or a polymer membrane also belongs to the possibilities.

According to a further elaboration of the invention, it is preferred to arrange for the minimum bubble size in the prefoam to be about 5 times greater than the average pore size. What is accomplished in this way is that all bubbles in the prefoam break up in the membrane and are transformed into smaller bubbles. This provides the advantage that the bubble size in the monodisperse foam can be controlled very accurately through the proper choice of the bubble size of the prefoam and the pore size of the membrane.

According to a further elaboration of the invention, it is preferred that in the foamed product about 3 to 10 milligrams of protein are included per m² of bubble surface. In addition, in that case, at least about 0.1 wt.% of protein should be in the solution, so that the proteins present on the bubble surface, if necessary, can be supplemented from the solution.

The method is advantageous in particular when the starting product is a milk protein-containing edible liquid.

The foam structure maintains over a longer time in that the bubbles have substantially the same size, so that disproportionation proceeds more slowly. Moreover, in the case of an edible product, through the use of the method, a product can be obtained that has the desired taste and structural properties.

The invention will presently be elucidated in and by a number of examples.

### Example 1

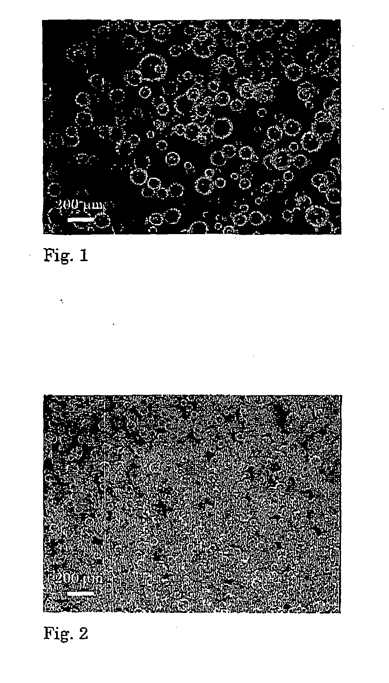

Fig. 1 shows a foam which has been produced with a Mondomix rotor-stator mixer, which is a standard commercially available device in the food industry for foaming products. In this device, gas is injected into a mixing chamber in which a rotor rotates at high speed and divides the gas into fine bubbles. Fig. 1 clearly shows that the bubbles have different dimensions. In Fig. 1, a 20% overrun was produced through addition of gas to protein solution (3% whey protein concentrate). The solution was thickened with 0.7% of xanthan gum to prevent creaming of the gas bubbles. In Fig. 1, the rotor speed was 1,000 rpm. The thus produced prefoam was then pumped through a membrane having an average pore size of 4 micrometers, at a rate of about 40,000 liters per m² per hour. This led to a pressure drop of 25 bar and the resultant monodisperse foam is represented in Fig. 2.

### Example 2

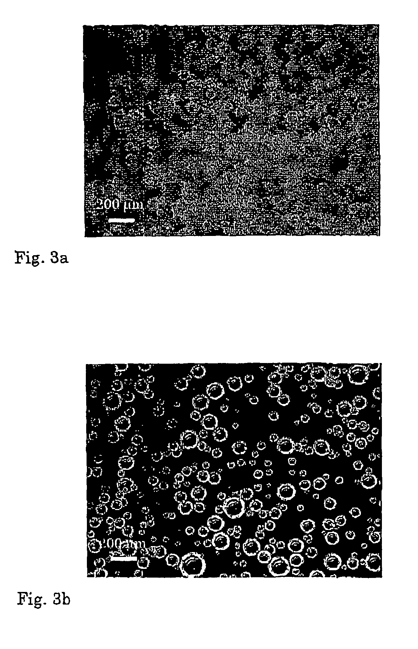

In a second Example, the prefoam from Fig. 1 was pumped through a membrane having an average pore size of 8 micrometers. This involved a pressure drop of 10 bar at a flow rate of 40,000 liters per m² per hour. The resultant monodisperse foam is represented in Fig. 3a.

In the Example of Fig. 1, pressing the prefoam through the membrane requires 2.5 kJ of energy per liter of foam. To effect a similar decrease in bubble size with the Mondomix, about 500 kJ per liter of foam is needed. The thus produced foam is depicted in Fig. 3b.

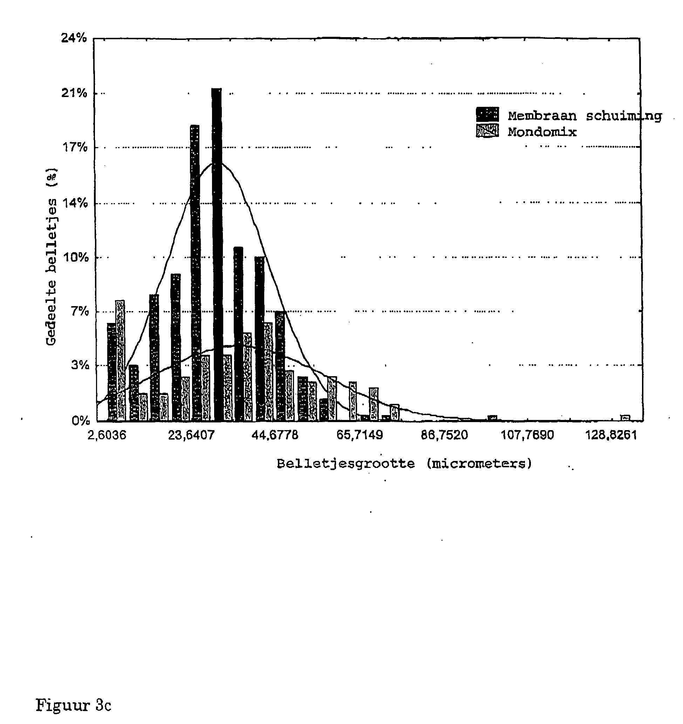

A comparison of Fig. 3b and Fig. 3a shows that while both foams have a comparable average bubble size, the foam made with the membrane has a narrower distribution in bubble size. This is quantified in Fig. 3c. More particularly, Fig. 3c shows a quantification of the bubble size distribution, with the legend term "Mondomix" referring to the foam as shown in Fig. 3b and "membrane foaming" referring to the foam as shown in Fig. 3a. The y-axis plots the number of bubbles in a particular size category as a percentage of the total number of bubbles. Through both peaks, a normal distribution has been fitted, which shows the following for the average bubble size and standard deviation therein:

| | |
|---|---|
| Membrane foam: | 30.4 ± 12.9 µm |
| Mondomix: | 35.4 ± 21.2 µm |

Accordingly, membrane foams give a considerable improvement of the monodispersity (in other words, considerably reduce the (relative) standard deviation).

Fig. 4 shows the monodisperse foam from Fig. 2 after it has been stored for 3.5 hours.

Fig. 5 shows how the prefoam from Fig. 1 has modified in structure after one day of storage. It is to be noted here that the foam, through denaturation of proteins situated on the bubble surface and subsequent compression resulting from disproportionation, has been stabilized against further disproportionation. Accordingly, the bubbles can only shrink to a particular minimum size and after that remain stable. Clearly visible is that there is a wide distribution in the bubble size.

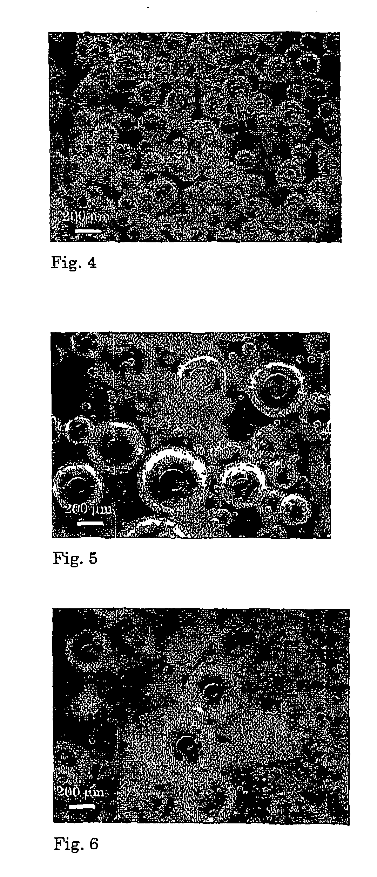

Finally, Fig. 6 shows a similarly stabilized foam after one day of storage, but the starting product was the foam from Fig. 2 which has been passed through a membrane of a pore size of 4 micrometers. Fig. 6 clearly shows that the bubble size in this foam is much more uniform and that there are only a limited number of large bubbles in the foam. As a result, the stability of the foam from Fig. 6 is particularly good.

It will be clear that the invention is not limited to the examples described and that various modifications are possible within the framework of the invention as defined by the claims.

## Claims

1. A method for manufacturing a monodisperse foam, wherein from an unfoamed liquid starting product, in a first foam forming step, a relatively coarse prefoam is formed which is insufficiently monodisperse, wherein the prefoam is passed through a membrane having a particular pore diameter to form a foam which is monodisperse, wherein the membrane has a thickness of at least 30 times the pore radius .

2. A method according to claim 1, wherein the average pore diameter of the membrane is chosen to be substantially 10 times smaller than the desired bubble diameter of the monodisperse foam.

3. A method according to claim 1 or 2, wherein the prefoam is produced by a standard commercially available foaming device.

4. A method according to any one of the preceding claims, wherein in the prefoam at least 20% gas is included.

5. A method according to any one of the preceding claims, wherein the starting product is a surfactant-containing composition.

6. A method according to any one of the preceding claims, wherein the viscosity of the prefoam is increased by adding to the starting product a thickener, such as, for instance, xanthan gum.

7. A method according to any one of the preceding claims, wherein the membrane is a sintered metal membrane, a ceramic or a polymeric membrane.

8. A method according to any one of the preceding claims, wherein the pore size of the membrane is in the range of 0.1-20 micrometers, more particularly in the range of 3-10 micrometers.

9. A method according to any one of the preceding claims, wherein the minimum bubble size in the prefoam is greater than 5 times the average pore size.

10. A method according to any one of the preceding claims, wherein in the foamed product 3-10 mg of protein are included per m² of bubble surface.

11. A method according to claim 10, wherein the protein in the bubble surface is in equilibrium with at least 0.1 wt.% of protein in the liquid surrounding the bubbles.

12. A method according to any one of the preceding claims, wherein the starting product is a milk protein-containing edible liquid.

13. A method according to any one of the preceding claims, wherein the unfoamed starting product contains proteins which, after foaming of the product, are capable of forming a surface around the gas bubbles that is undeformable under the prevailing conditions by denaturing after adsorption to the bubble surfaces, followed by compression of the bubble surface.

14. A method according to claim 13, wherein the denaturation and the compression of the bubble surface take place after the foam has passed the membrane.

15. A method according to claim 13 or 14, wherein the rigid surface around the gas bubbles has been formed through heating of the foamed product followed by compression.

16. Use of a method according to any one of the preceding claims for imparting a particular taste sensation to an edible foamed product utilizing, wherein the taste sensation is set through a suitable choice of the bubble size of the foam, wherein this bubble size is determined by choosing the pore size of the membrane to be about 10 times smaller than the desired bubble size.

## Patentansprüche

1. Verfahren zur Herstellung eines monodispersen Schaumes, worin von einem ungeschäumten flüssigen Ausgangsprodukt in einem ersten Schaumbildungsschritt ein verhältnismäßig grober Vorschaum gebildet wird, der unzureichend monodispers ist, worin der Vorschaum durch eine Membran mit einem bestimmten Porendurchmesser geleitet wird, zur Bildung eines Schaumes, der monodispers ist, worin die Membran eine Dicke von zumindest dem 30-fachen des Porenradius hat.

2. Verfahren nach Anspruch 1, worin der durchschnittliche Porendurchmesser der Membran ausgewählt wird, so dass er im wesentlichen 10 Mal kleiner ist als der gewünschte Blasendurchmesser des monodispersen Schaumes.

3. Verfahren nach Anspruch 1 oder 2, worin der Vorschaum durch eine kommerziell erhältliche Standardschäumvorrichtung erzeugt wird.

4. Verfahren nach einem der vorhergehenden Ansprüche, worin in dem Vorschaum zumindest 20% Gas enthalten sind.

5. Verfahren nach einem der vorhergehenden Ansprüche, worin das Ausgangsprodukt eine Tensid-haltige Zusammensetzung ist.

6. Verfahren nach einem der vorhergehenden Ansprüche, worin die Viskosität des Vorschaumes durch Zugabe eines Verdickers wie zum Beispiel Xanthangummi zum Ausgangsprodukt erhöht wird.

7. Verfahren nach einem der vorhergehenden Ansprüche, worin die Membran eine gesinterte Metallmembran, Keramik- oder Polymermembran ist.

8. Verfahren nach einem der vorhergehenden Ansprüche, worin die Porengröße der Membran im Bereich von 0,1 bis 20 µm, mehr spezifisch im Bereich von 3 bis 10 µm liegt.

9. Verfahren nach einem der vorhergehenden Ansprüche, worin die minimale Blasengröße in dem Vorschaum größer ist als das 5-fache der durchschnittlichen Porengröße.

10. Verfahren nach einem der vorhergehenden Ansprüche, worin in dem geschäumten Produkt 3 bis 10 mg Protein pro m² Blasenoberfläche enthalten sind.

11. Verfahren nach Anspruch 10, worin das Protein in der Blasenoberfläche im Gleichgewicht mit zumindest 0,1 Gew.% Protein in der Flüssigkeit ist, die die Blasen umgibt.

12. Verfahren nach einem der vorhergehenden Ansprüche, worin das Ausgangsprodukt eine Milchprotein-haltige essbare Lösung ist.

13. Verfahren nach einem der vorhergehenden Ansprüche, worin das ungeschäumte Ausgangsprodukt Proteine umfasst, die nach dem Schäumen des Produktes in der Lage sind, eine Oberfläche um die Gasblasen herum, die unter den vorherrschenden Bedingungen nicht deformierbar ist, durch Denaturierung nach Adsorption an den Blasenoberflächen zu bilden, mit anschließender Kompression der Blasenoberfläche.

14. Verfahren nach Anspruch 13, worin die Denaturierung und die Kompression der Blasenoberfläche stattfindet, nachdem der Schaum die Membran passiert hat.

15. Verfahren nach Anspruch 13 oder 14, worin die steife Oberfläche um die Gasblasen herum durch Erwärmen des geschäumten Produktes mit anschließender Kompression gebildet worden ist.

16. Verwendung eines Verfahrens nach einem der vorhergehenden Ansprüche, um einem essbaren geschäumten Produkt eine bestimmte Geschmacksempfindung zu verleihen, wobei dann, wenn die Geschmacksempfindung durch eine geeignete Wahl der Blasengröße des Schaumes eingestellt wird, die Blasengröße bestimmt wird durch Wählen der Porengröße der Membran, so dass sie etwa 10 Mal kleiner ist als die gewünschte Blasengröße.

## Revendications

1. Procédé de fabrication d'une mousse monodispersée, où à partir d'un produit de départ liquide non expansé, dans une première étape de formation de mousse, une pré-mousse relativement grossière est formée qui est insuffisamment monodispersée, où on fait passer la pré-mousse à travers une membrane ayant un diamètre de pore particulier pour former une mousse qui est monodispersée, où la membrane possède une épaisseur d'au moins 30 fois le rayon du pore.

2. Procédé selon la revendication 1, dans lequel le diamètre moyen des pores de la membrane est choisi pour être sensiblement 10 fois plus petit que le diamètre de bulle désiré de la mousse monodispersée.

3. Procédé selon la revendication 1 ou 2, dans lequel la pré-mousse est produite par un dispositif de moussage classique disponible dans le commerce.

4. Procédé selon l'une quelconque des revendications précédentes, dans lequel dans la pré-mousse est incorporé au moins 20 % de gaz.

5. Procédé selon l'une quelconque des revendications précédentes, dans lequel le produit de départ est une composition contenant un tensioactif.

6. Procédé selon l'une quelconque des revendications précédentes, dans lequel la viscosité de la pré-mousse est augmentée par l'addition au produit de départ d'un épaississant, tel que, par exemple, de la gomme de xanthane.

7. Procédé selon l'une quelconque des revendications précédentes, dans lequel la membrane est une membrane de métal fritté, une membrane céramique ou polymérique.

8. Procédé selon l'une quelconque de revendications précédentes, dans lequel la taille des pores de la membrane est compris dans le domaine de 0,1 µm à 20 µm, plus particulièrement dans le domaine de 3 µm à 10 µm.

9. Procédé selon l'une quelconque des revendications précédentes, dans lequel la taille minimum des bulles dans la pré-mousse est supérieure à 5 fois la taille moyenne des pores.

10. Procédé selon l'une quelconque des revendications précédentes, dans lequel dans le produit expansé 3 mg à 10 mg de protéines sont incorporés par m² de surface des bulles.

11. Procédé selon la revendication 10, dans lequel la protéine dans la surface des bulles est en équilibre avec au moins 0,1 % en poids de protéine dans le liquide entourant les bulles.

12. Procédé selon l'une quelconque des revendications précédentes, dans lequel le produit de départ est un liquide comestible contenant des protéines de lait.

13. Procédé selon l'une quelconque de revendications précédentes, dans lequel le produit de départ non expansé contient des protéines qui, après le moussage du produit, sont capables de former une surface autour des bulles de gaz qui est indéformable dans les conditions régnantes par dénaturation après adsorption à la surface des bulles, suivie par la compression de la surface des bulles.

14. Procédé selon la revendication 13, dans lequel la dénaturation et la compression de la surface des bulles ont lieu après que la mousse soit passée par la membrane.

15. Procédé selon la revendication 13 ou 14, dans lequel la surface rigide autour des bulles de gaz a été formée par chauffage du produit expansé suivi par une compression.

16. Utilisation d'un procédé selon l'une quelconque des revendications précédentes pour attribuer une sensation de saveur particulière à un produit expansé comestible, où la sensation de saveur est déterminée grâce à un choix approprié de la taille des bulles de la mousse, où cette taille des bulles est déterminée en choisissant la taille de pores de la membrane comme étant environ 10 fois plus petite que la taille des bulles désirée.
